# EUROPEAN PATENT APPLICATION

(11) **EP 4 625 677 A1**
(43) Date of publication of application: **01.10.2025**
(21) Application number: 24849662.2
(22) Date of filing: 02.08.2024
(51) Int. Cl.: H01M 50/528, B23K 26/21, H01M 10/04, H01M 50/169, H01M 50/152, H01M 50/538

(54) **BATTERY CELL AND METHOD FOR MANUFACTURING BATTERY CELL**

(30) Priority: 03.08.2023 KR 20230101856; 01.08.2024 KR 20240102303
(71) Applicant: LG Energy Solution, Ltd., Seoul 07335 (KR)
(72) Inventor: PARK, Jeong-Ho, Daejeon 34122 (KR); CHO, Sung-Min, Daejeon 34122 (KR); KIM, Do-Gyun, Daejeon 34122 (KR)
(74) Representative: Goddar, Heinz J.
(86) International application number: PCT/KR2024/011441
(87) International publication number: WO 2025/029095

(57) **Abstract**

The present disclosure provides a welding structure of a battery can, a collector plate, and a cap, a welding method, and a battery cell to which the welding structure and the welding method are applied. The battery cell includes a can and an electrode assembly accommodated inside the can. The can includes a bottom member, a sidewall member connected to the bottom member and extending in an axial direction, and a cap configured to cover an open end provided at one axial end of the sidewall member. A can connection portion is provided on an edge of a collector plate electrically connected to an electrode of the electrode assembly so as to come into electrical contact with the can. An edge of the cap is welded and fixed. The welding includes a plurality of first weld portions having an edge of the open end of the sidewall member, an edge of the cap, and the can connection portion, which are welded together, and spaced apart from each other in a circumferential direction, and a second weld portion having at least an edge of the open end of the sidewall member and an edge of the cap, which are welded, and disposed between the first weld portions. The first weld portion and the second weld portion are formed continuously to be alternately disposed along the circumferential direction.

## Description

### TECHNICAL FIELD

The present disclosure relates to a battery cell and a method for manufacturing the battery cell.

The present disclosure relates to a battery cell, and a battery pack and a vehicle including the same.

This application is based on and claims priority from Korean Patent Application No. 10-2023-0101856, filed on August 03, 2023, with the Korean Intellectual Property Office, the disclosure of which is incorporated herein in its entirety by reference. In addition, this application is based on and claims priority from Korean Patent Application No. 10-2024-0102303, filed on August 01, 2024, with the Korean Intellectual Property Office, the disclosure of which is incorporated herein in its entirety by reference.

### BACKGROUND ART

The process of manufacturing a battery cell using a cylindrical can includes forming a circular bottom and a cylindrical sidewall member connected thereto through deep drawing using a metal sheet, storing an electrode assembly therein, and then covering and finishing an open end of the sidewall member with a cap.

Meanwhile, a collector plate is provided at an end facing the open end, among both axial ends of the electrode assembly, so as to come into electrical contact with the electrode tab of the electrode assembly. The collector plate is connected to the cap or the sidewall member by welding or the like so as to be electrically connected with the cap or the sidewall member.

The collector plate must remain in close contact with the cap or the sidewall member in the process of welding the collector plate to the cap or the sidewall member, and to this end, a jig is required for close contact between the collector plate and the cap or between the collector plate and the sidewall member, and in addition, a mask is required to expose the welding area.

In order to bring the collector plate into close contact with the cap or sidewall member using the mask or jig, a space for receiving the mask or jig must be provided inside the can. However, this space remains empty after the mask or jig is removed, causing a problem in which the internal space of the can is not efficiently utilized. This hinders the design to increase the energy density per unit volume of the can.

In addition, in order to close the open end of the cylindrical can, a process for electrically connecting the collector plate to the cap or sidewall member and a process for connecting the cap to the sidewall member are performed, respectively. Such an increase in the number of processes reduces the production efficiency of the cylindrical battery cell and increases the production cost.

Therefore, it is necessary to provide a method capable of efficiently coupling the collector plate with the can and efficiently closing the open end of the can, and/or a method capable of realizing the efficiency of the welding process and the reliable strength of the welding when performing the welding process for components.

### DISCLOSURE

### Technical Problem

The present disclosure is designed to solve the problems of the related art, and therefore the present disclosure is directed to providing a welding structure of a battery can, a collector plate, and a cap, which excludes a separate welding mask or jig, thereby efficiently utilizing the inner space of the can when welding the collector plate provided at the open end of the can to the can and enabling design to increase the energy density per unit volume of the can, and a battery cell to which the welding structure is applied.

According to another aspect, the present disclosure is also to provide a welding structure of a battery can, a collector plate, and a cap, which enhances the stability of the welding process by giving the functions of a mask and a jig to the can, the collector plate, and the cap, and a battery cell to which the welding structure is applied.

According to another aspect, the present disclosure is also to provide a welding structure of a battery can, a collector plate, and a cap, which integrates a process of welding the collector plate to the can and a process of welding the cap to the sidewall member into a single welding process, thereby increasing the production efficiency of a cylindrical battery cell and reducing the production cost, and a battery cell to which the welding structure is applied.

According to another aspect, the present disclosure is also to provide a welding structure of a can, a collector plate, and a cap, which minimizes the generation of welding heat while welding the can, the collector plate, and the cap together, thereby simplifying the assembly process of the collector plate and the cap without adversely affecting the electrode assembly, and a battery cell to which the welding structure is applied.

According to another aspect, the present disclosure is also to provide a welding structure of a can, a collector plate, and a cap capable of enhancing the sealing between the can and the cap while welding the can, the collector plate, and the cap together, and a battery cell to which the welding structure is applied.

According to another aspect, the present disclosure is also to provide a welding structure of a can, a collector plate, and a cap capable of securing weldability, increasing the stability of the process, and ensuring the durability of the welding, and a battery cell to which the welding structure is applied.

According to another aspect, the present disclosure is also to provide a welding structure of a can, a collector plate, and a cap capable of performing stable and rapid welding while welding the can, the collector plate, and the cap together to be suitable for mass production, and a battery cell to which the welding structure is applied.

The technical problems that the present disclosure seeks to solve are not limited to the above-mentioned problems, and other objects and advantages of the present disclosure not mentioned above will be understood from the description below and will be more clearly understood by the embodiments of the present disclosure. In addition, it will be easily understood that the objects and advantages of the present disclosure may be realized by the means shown in the appended claims and combinations thereof.

### Technical Solution

The technical problems above may be solved by forming a first weld portion (triple weld portion) in which the can, the collector plate, and the cap are intermittently or partially welded together during a seam welding process for sealing the can and by forming a second weld portion (double weld portion) in which at least the can and the cap are welded together in the remaining seam welding section.

This may be implemented by forming a second weld portion through radiation of a laser beam in a scanning manner in order to seam-weld at least the can and the cap together along the abutting portion of the can and the cap extending in the circumferential direction and by triple-welding the can, the collector plate, and the cap together in the section of forming a first weld portion with an energy density of the laser and/or a scan speed, which is different from that in the section forming the second weld portion.

Accordingly, it is possible to suppress the generation of excessive welding heat and reliably seal the can while maintaining the simplicity of the welding process of the can, the collector plate, and the cap.

The control of the energy density or the control of the scan speed may be carried out in order to maintain the consistency of the generation, propagation, and solidification of the melted pool so that the propagation of the melted pool may be smoothly performed even at the boundary between the first weld portion and the second weld portion.

Then, the seam welding may be performed continuously, and the propagation of the melted pool may be smoothly performed only in the section where triple welding is required for electrical connection with the electrode, so that the welding range is varied, thereby maintaining the consistency of the generation, propagation, and solidification of the melted pool during the propagation process of the melted pool, and the propagation of the melted pool may be smoothly performed, enabling reliable sealing without any defect.

The present disclosure to solve the above-described problems may be applied to a battery cell including an electrode assembly, a collector plate electrically connected to the electrode assembly, and a can accommodating the electrode assembly and the collector plate.

The can includes a bottom member, a sidewall member connected to the bottom member and extending in an axial direction, and a cap configured to cover an open end provided at one axial end of the sidewall member.

The electrode assembly may be in the form of a jellyroll wound around a predetermined axis.

An electrode tab may be provided at an end facing the open end, among both axial ends of the electrode assembly, and the collector plate may be connected to the electrode tab.

The collector plate may include an electrode tab connection portion that is in electrical contact with the electrode tab.

The collector plate includes a can connection portion that is in electrical contact with the can.

The can connection portion and the electrode tab connection portion may be electrically connected.

The can connection portion may be disposed radially further outward than the electrode tab connection portion.

First weld portions in which an edge of the open end of the sidewall member, an edge of the cap, and the can connection portion are welded together are formed at multiple positions so as to be spaced apart from each other along the circumferential direction.

The first weld portions may be intermittently formed in the process of forming a second weld portion in which at least an edge of the open end of the sidewall member and an edge of the cap are welded through seam welding.

The first weld portions may be provided in four or more places.

The first weld portions may be provided in 24 or more places.

The second weld portion may be provided to be connected to the first weld portion in the circumferential direction.

The second weld portion may be provided between neighboring first weld portions in the circumferential direction.

The first weld portion and the second weld portion may be formed by laser welding.

The first weld portion and the second weld portion may be formed by common scan-welding, that is, by one scan-welding.

The circumferential length of the first weld portion may be approximately 0.1 mm to 6 mm.

Accordingly, welding heat generation for forming the first weld portion may be suppressed.

The output of a laser beam in the section forming the first weld portion may be greater than the output of a laser beam in the section forming the second weld portion

The energy density of a laser radiation area of the section forming the first weld portion may be higher than the energy density of a laser radiation area of the section forming the second weld portion.

The laser scan speed in the section forming the first weld portion and the laser scan speed in the section forming the second weld portion may be constant.

The laser scan speed in the section forming the second weld portion may be less than the laser scan speed in the section forming the first weld portion.

The scan speed relative to the laser output in the section forming the first weld portion may be less than the scan speed relative to the laser output in the section forming the second weld portion.

The scan speed relative to the energy density in the laser radiation area for forming the first weld portion may be less than the scan speed relative to the energy density in the laser radiation area for forming the second weld portion.

The depth at which the first weld portion is formed in the axial direction may be greater than the depth at which the second weld portion is formed.

The cross-sectional area of the first weld portion may be greater than the cross-sectional area of the second weld portion when viewed in the circumferential direction.

Additionally, third weld portions, in which an edge of the open end of the sidewall member and an edge of the cap are welded, may be formed to be spaced apart from each other in the circumferential direction.

The third weld portion may be a preliminary weld portion.

The first weld portion and the second weld portion may be main weld portions. If the third weld portion is formed through the preliminary welding before the main welding to form the first weld portion and the second weld portion, the gap caused by the component tolerance of the can and the cap may be fixed, and resistance may be provided to thermal deformation occurring during the welding process.

The main weld portion can be formed on the preliminary weld portion. Accordingly, the preliminary weld portion may overlap the main weld portion.

The welding depth and/or welding area of the third weld portion may be less than those of the second weld portion.

The welding depth and/or welding area of the second weld portion may be less than those of the first weld portion.

The section where the third weld portion is formed in the circumferential direction may be configured not to overlap the section where the first weld portion is formed. Accordingly, the laser beam does not meet the boundary surface of the third weld portion, i.e., the preliminary weld portion, in the section where triple welding is performed, so that the melt pool may be stably propagated.

The section where the third weld portion is formed in the circumferential direction may be configured to overlap the section where the second weld portion is formed. Since this has a normal relationship between the preliminary welding and the main welding, the sealing reliability of the second weld portion may be secured.

The can connection portion may include a first portion in contact with the sidewall member and a second portion in contact with the cap.

The first portion may include an outer abutting surface that faces the inner surface of the sidewall member in the radial direction. A first section, which is at least a portion of the axial section of the outer abutting surface, may come into contact with the inner surface of the sidewall member.

The second portion may include a cap-abutting surface that faces and comes into contact with the inner surface of the cap in the axial direction.

The cap may include an outer bonding surface that faces the inner surface of the sidewall member in the radial direction.

The outer bonding surface of the cap may face and come into contact with the inner surface of the sidewall member in the radial direction.

The cap may include a collector plate abutting surface defined by the axially inner surface of the cap and axially facing and being in contact with the cap-abutting surface of the can connection portion of the collector plate.

The outer bonding surface of the cap may be disposed axially outward from the collector plate abutting surface and disposed radially outward.

The cap may include an inclined surface disposed inward from the collector plate-abutting surface in the radial direction on the axially inner surface of the cap and extending axially inward as it is closer to the inner side in the radial direction.

The inclined surface may come into contact with at least a corner portion of an axially outer end and a radially inner end of the can connection portion of the collector plate.

Accordingly, the centers of the collector plate and the cap may be aligned.

Accordingly, the axially outer end of the can connection portion may receive a force that acts outward in the radial direction.

The outer diameter of the first section of the outer abutting surface is larger than the inner diameter of the inner surface of the sidewall member in contact therewith. Accordingly, the first section of the outer abutting surface may be forcibly pressed to the sidewall member.

The collector plate may be softer than the sidewall member of the can.

At one axial end, the inner diameter of the sidewall member may be extended.

The sidewall member may include an inner-diameter expansion portion in which the inner diameter of the sidewall member is increased, a first inner surface provided inward in the axial direction from the inner-diameter expansion portion, and a second inner surface provided outward in the axial direction from the inner-diameter expansion portion and having an inner diameter greater than that of the first inner surface.

The outer abutting surface of the can connection portion may face and come into contact with the second inner surface.

The outer bonding surface of the cap may face or come into contact with the second inner surface.

The outer diameter of the first section of the outer abutting surface may be greater than the inner diameter of the first inner surface, and may correspond to or be less than the inner diameter of the second inner surface.

The can connection portion may be configured to extend axially outward from a bent portion obtained by bending the collector plate, extending outward in the radial direction, outward in the axial direction.

If the outer diameter of the outer abutting surface is set to be slightly larger than the inner diameter of the second inner surface, the outer abutting surface may be pressed to the second inner surface during the process of inserting the collector plate, so that the outer abutting surface and the second inner surface may be in close contact radially.

As a result, in the state where the collector plate is inserted, the outer diameter of the outer abutting surface may correspond to the inner diameter of the second inner surface.

The outer bonding surface of the cap and the axial end of the inner surface of the sidewall member, which face each other in the radial direction, may be exposed axially outward.

The first weld portion and the second weld portion may be formed by a laser beam radiated from the axially outer side of the battery cell to the outer bonding surface of the cap and the axial end of the inner surface of the sidewall member.

In this case, since the outer abutting surface of the collector plate, which is disposed axially inward from the cap, may face and come into contact with the inner surface of the sidewall member, the laser beam may be prevented from being directly radiated onto the can inner space.

The inner-diameter expansion portion may prevent the laser, which may be radiated into the gap between the sidewall member and the collector plate, from penetrating inside.

The collector plate may have higher thermal conductivity than the sidewall member. Accordingly, the heat generated when forming the first weld portion and the second weld portion may be dispersed to the electrode assembly through the collector plate, thereby preventing the welding heat from damaging the separator of the electrode assembly.

An overhang may be provided at one axial end of the sidewall member so as to protrude further outward than the cap in the axial direction.

The overhang may be melted to flow into a weld portion of the inner surface of the sidewall member and the outer bonding surface of the capable of during the process of forming the first weld portion and the second weld portion. Accordingly, the weld portion may be formed over the entire outer bonding surface of the cap in the axial direction, despite differences of the welding processes.

The overhang may be melted in the process of forming the first weld portion and the second weld portion in the main welding. Accordingly, the height of the battery cell can be defined by the surface of the cap, and as a result, the height dimension of the battery cell may be managed at a constant level.

The present disclosure provides a method for manufacturing the above-described battery cell.

The battery cell includes a can including a bottom member, a sidewall member connected to the bottom member and extending in the axial direction, and a cap that covers an open end provided at one axial end of the sidewall member, and an electrode assembly accommodated inside the can.

The method for manufacturing the battery cell may include a preparatory step of bonding a collector plate to an electrode tab provided at an end facing the open end, among both axial ends of the electrode assembly.

The manufacturing method includes a first step of inserting the collector plate into the can and bring an outer abutting surface of a can connection portion provided at a radially outer edge of the collector plate into contact with an inner surface of the sidewall member.

The manufacturing method includes a second step of covering the open end of the sidewall member with the cap, causing an outer bonding surface provided on an edge of the cap to face the inner surface of the sidewall member in a radial direction, and bring the collector plate abutting surface into contact with a cap-abutting surface of the collector plate in the axial direction.

The manufacturing method includes a third step of forming a weld portion at an abutting portion between the inner surface of the sidewall member and the outer bonding surface of the cap.

In this case, the overhang of the sidewall member, which protrudes further outward in the axial direction than the cap, may be melted to flow into the weld portion between the inner surface of the sidewall member and the outer bonding surface of the cap.

In the third step, a laser beam is radiated onto an abutting portion of the inner surface of the sidewall member and the outer bonding surface of the cap in the axial direction from an axially outer side, while continuously radiating the laser beam along the circumferential direction and performing welding such that a first weld portion in which the inner surface of the sidewall member, the outer bonding surface of the cap, and the can connection portion of the collector plate are welded together alternates with a second weld portion in which at least the inner surface of the sidewall member and the outer bonding surface of the cap are welded together.

In this case, the first weld portion and the second weld portion may be alternately formed so that the circumferential length of the second weld portion is formed longer than the circumferential length of the first weld portion.

A preliminary welding step may be further performed between the second step and the third step.

In the preliminary welding step, a plurality of third weld portions, in which an edge of the open end of the sidewall member and an edge of the cap are welded, may be formed to be spaced apart from each other in the circumferential direction.

In the third step, the intensity of a laser beam radiated onto a section for welding the first weld portion or an energy density of a laser radiation area thereof may be stronger or higher than the intensity of a laser beam radiated onto a section for welding the second weld portion or an energy density of a laser radiation area thereof.

In the third step, the movement speed of a radiation area of the laser beam radiated onto the section for welding the first weld portion and the movement speed of a radiation area of the laser beam radiated onto the section for welding the second weld portion may be constant.

In the third step, the scan speed relative to the output of the laser beam in the section for forming the first weld portion may be less than the scan speed relative to the output of the laser beam in the section for forming the second weld portion.

In the third step, the scan speed relative to the energy density of the laser radiation area for forming the first weld portion may be less than the scan speed relative to the energy density of the laser radiation area for forming the second weld portion.

### Advantageous Effects

According to the present disclosure, it is possible to ensure electrical connection of the collector plate and sealing of the can while suppressing the generation of welding heat, compared to welding the entire circumferential section of the can, the collector plate, and the cap together.

In another aspect, according to the present disclosure, it is possible to sufficiently implement a required internal resistance and reliably seal the can while suppressing the generation of welding heat.

In another aspect, according to the present disclosure, it is possible to secure weldability, stability, and durability while welding the sidewall member, the cap, and the collector plate together.

In another aspect, according to the present disclosure, it is possible to significantly reduce the assembly works of the battery cell by welding the sidewall member, the cap, and the collector plate together.

In another aspect, according to the present disclosure, since welding is not required inside the can, the risk of foreign substances such as welding spatter penetrating into the electrode assembly and causing defects may be eliminated.

In another aspect, according to the present disclosure, the volume of the electrode assembly accommodated inside the can may be secured to the maximum, thereby increasing the energy density of the battery cell.

In addition to the effects described above, the specific effects of the present disclosure will be described in the detailed description of the invention below.

### DESCRIPTION OF DRAWINGS

FIG. 1 is a perspective view of a cylindrical battery cell of an embodiment.
FIG. 2 is an exploded perspective view of an electrode assembly, which has not yet been wound up, accommodated inside a can in FIG. 1.
FIG. 3 is a perspective view of the electrode assembly in FIG. 2 in a laminated state, which has not yet been wound up.
FIG. 4 is a perspective view of an electrode assembly assembled in a cylindrical jellyroll shape by winding the laminate in FIG. 3.
FIG. 5 is a perspective view illustrating a state in which a first collector plate is bonded to an electrode tab of a first electrode of an electrode assembly.
FIG. 6 is a perspective view illustrating a state in which a second collector plate is bonded to an electrode tab of a second electrode of an electrode assembly.
FIG. 7 is a side cross-sectional view illustrating a process of storing an electrode assembly with a bonded collector plate inside a can.
FIG. 8 is a side cross-sectional view illustrating a process of bonding a first collector plate of an electrode assembly accommodated in a can to a first electrode terminal.
FIG. 9 is a side cross-sectional view illustrating the process of covering an open end of a can in which an electrode assembly is accommodated with a cap.
FIG. 10 is a side cross-sectional view illustrating the state in which an open end of a can in which an electrode assembly is accommodated is covered with a cap.
FIG. 11 is an enlarged view of the rectangular area in FIG. 9.
FIG. 12 is an enlarged view of the rectangular area in FIG. 10.
FIG. 13 is an enlarged view of the portion in which the collector plate, the cap, and the can in FIG. 12 abut on each other.
FIG. 14 is a plan view illustrating the state in which a cap and a can are preliminarily welded.
FIG. 15 is a cross-sectional view illustrating the configuration in FIG. 14.
FIG. 16 is a plan view illustrating the state in which a cap and a can are permanently welded.
FIG. 17 is a cross-sectional view illustrating the configuration in FIG. 16.
FIG. 18 is a cross-sectional view illustrating the configuration in FIG. 16.
FIG. 19 is a cross-sectional view illustrating the configuration in FIG. 16.
FIG. 20 is an enlarged view illustrating a modified example of the can in FIG. 12.
FIG. 21 is a flowchart illustrating an example of process of manufacturing a battery cell according to an embodiment.
FIGS. 22 and 23 illustrate a battery pack to which the battery cell of the embodiment is applied and a vehicle equipped with such a battery pack.

### BEST MODE

The above-mentioned purposes, features, and advantages will be described in detail below with reference to the attached drawings, so that those skilled in the art to which the present disclosure belongs may easily implement the technical ideas of the present disclosure. In describing the present disclosure, descriptions of related known technology, which may obscure the subject matter of the present disclosure, will be omitted. Hereinafter, preferred embodiments of the present disclosure will be described in detail with reference to the accompanying drawings. In the drawings, the same reference numerals are used to indicate the same or similar elements.

Although "first", "second", etc. are used to describe various elements, these elements are not limited to these terms. These terms are only used to distinguish one element from another element, and unless otherwise stated, a first element may also be a second element.

Throughout the specification, unless otherwise stated, respective elements may include a single or a plurality of elements.

Hereinafter, the configuration in which an element is disposed "in the upper portion (or lower portion)" or "at the top (or bottom)" of a target element may indicate that the element may be disposed in contact with the upper surface (or lower surface) of the target element and that another element may be interposed between the target element and the element disposed at the top (or bottom) of the target element.

Additionally, the expression "an element is 'connected to', 'coupled to', or 'in contact with' another element" should be understood that the elements may be directly connected to, coupled to, or in contact with each other, and that another element may be "interposed" between the elements or that the elements may be "connected to", "coupled to", or "in contact with" each other through other elements.

As used herein, the singular expressions include the plural expressions unless clearly stated otherwise. In this document, the terms "configured to have" or "include" should not be construed as necessarily including all of the various elements or various steps described in the specification, and should be construed such that that some of the elements or some of the steps may be excluded or such that additional elements or steps may be further included.

Throughout the specification, "A and/or B", unless otherwise stated, may denote A, B or A and B, and "C to D", unless otherwise stated, may denote "equal to or greater than C and equal to or less than D."

In the description of embodiments, the axial direction indicates a direction in which a winding axis of an electrode assembly wound in a jellyroll shape extends, and the radial direction indicates a direction approaching (centripetal direction) or moving away (centrifugal direction) from the winding axis, and the circumferential direction indicates a direction surrounding the winding axis.

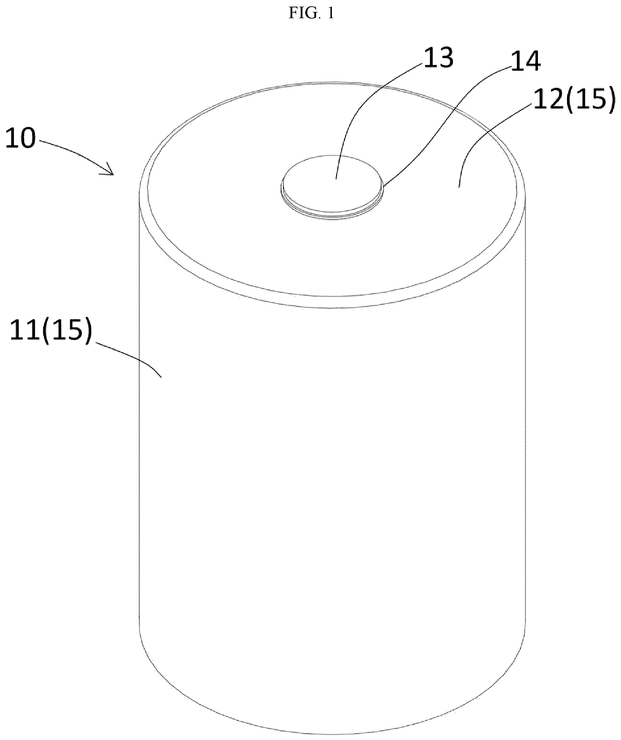

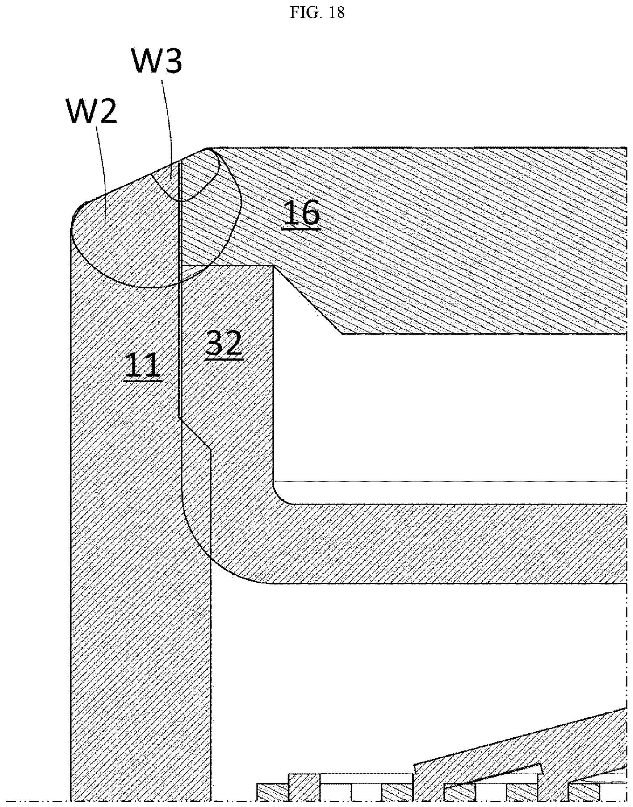

Hereinafter, embodiments of a battery cell to which a welding structure of the present disclosure is applied will be described in detail with reference to FIGS. 1 to 19.

The battery cell of the embodiment may be, for example, a cylindrical battery cell having a form factor ratio (defined as the ratio of the diameter (Φ) to the height (H) of the cylindrical battery cell) of greater than about 0.4.

Here, the form factor denotes a value indicating the diameter and height of the cylindrical battery cell. The cylindrical battery cell may be, for example, a 46110 cell, a 48750 cell, a 48110 cell, a 48800 cell, a 46800 cell, a 4690 cell, or a 4695 cell. In the value indicating the form factor, the first two digits indicate the diameter of the cell, the next two digits indicate the height of the cell, and the last number 0 indicates that the cross-section of the cell is circular.

The battery cell may be a cylindrical battery cell having a diameter of approximately 46 mm, a height of approximately 110 mm, and a form factor ratio of 0.418.

According to another embodiment, the battery cell may be a cylindrical battery cell having a diameter of approximately 48 mm, a height of approximately 75 mm, and a form factor ratio of 0.640.

According to another embodiment, the battery cell may be a cylindrical battery cell having a diameter of approximately 48 mm, a height of approximately 110 mm, and a form factor ratio of 0.418.

According to another embodiment, the battery cell may be a cylindrical battery cell having a diameter of approximately 48 mm, a height of approximately 80 mm, and a form factor ratio of 0.600.

According to another embodiment, the battery cell may be a cylindrical battery cell having a diameter of approximately 46 mm, a height of approximately 80 mm, and a form factor ratio of 0.575.

The present disclosure may also be applied to battery cells having a form factor ratio of approximately 0.4 or less, such as a 18650 cell, a 21700 cell, and the like. In the case of the 18650 cell, the diameter is approximately 18 mm, the height is approximately 65 mm, and the form factor ratio is 0.277. In the case of the 21700 cell, the diameter is approximately 21 mm, the height is approximately 70 mm, and the form factor ratio is 0.300.

The battery cell of the embodiment may include an electrode assembly 20, collector plates 31 and 32 electrically connected to the electrode assembly 20, and a can 10 accommodating the electrode assembly 20 and the collector plates 31 and 32.

The can 10 may include a bottom member 12, a sidewall member 11 connected to the bottom member 12 and extending in the axial direction, and a cap 16 covering an open end provided at one axial end of the sidewall member 11. Here, the axial direction may indicate a direction parallel to the winding axis of the electrode assembly 20 of the present disclosure.

The bottom member 12 may have a disk shape with a hole formed in the center. The sidewall member 11 may have the shape of a circular tube. That is, the sidewall member 11 may have a hollow cylindrical shape.

The bottom member 12 and the sidewall member 11 may be formed as one piece. The bottom member 12 and the sidewall member 11 may be manufactured by forming a metal sheet having nickel plated on the surface of steel through a deep drawing process, and trimming the front end of the sidewall member 11 with a punch while holding it with a blank holder. In addition, the material of the can 10 is not limited thereto.

A first electrode terminal 13 may be fitted into the hole. The first electrode terminal 13 may be fixed to the bottom member 12 by riveting. A gasket 14 may be interposed between the first electrode terminal 13 and the can 10. The gasket 14 may be interposed between the first electrode terminal 13 and the bottom member 12 to seal the portion between the inside and outside of the can 10, thereby preventing leakage of the electrolyte and electrically insulating the first electrode terminal 13 and the bottom member 12 from each other.

However, the connection method of the first electrode terminal 13 and the bottom member 12 is not limited thereto. For example, various other fixing methods, such as a bolt-nut joint method, a glass seal method, or a chrome coating & PP-MAH thermal bonding method, may also be applied as long as it is able to seal the portion between the first electrode terminal 13 and the bottom member 12 and electrically insulate the first electrode terminal 13 and the bottom member 12 from each other.

The first electrode terminal 13 may have a first polarity, and the can 10 may have a second polarity opposite the first polarity. That is, the bottom member 12 of the can 10, the sidewall member 11 connected thereto, and the cap 16 connected to the sidewall member 11, which will be described later, may all have a second polarity.

Accordingly, the battery cell may have both the first electrode terminal 13 and the second electrode terminal 15 disposed at the axial end, i.e., the closed end, where the bottom member 12 is provided. Then, the battery cell may have both a bus-bar connected to the first electrode terminal 13 and a bus-bar connected to the second electrode terminal 15, which are positioned at the top of the battery cell.

In an example, the first electrode terminal 13 may be a positive electrode terminal, and the second electrode terminal 15 may be a negative electrode terminal. In addition, the opposite may also be possible.

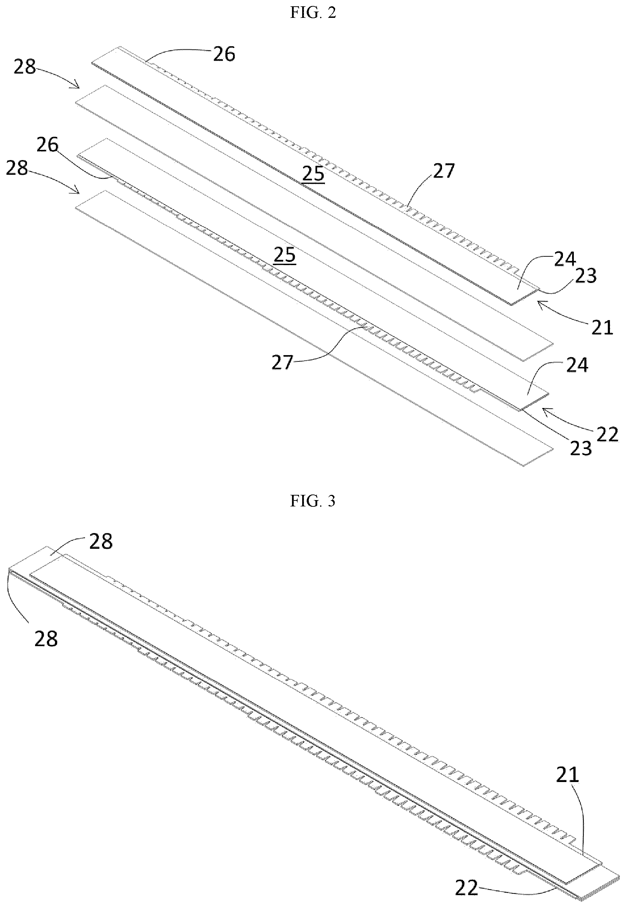

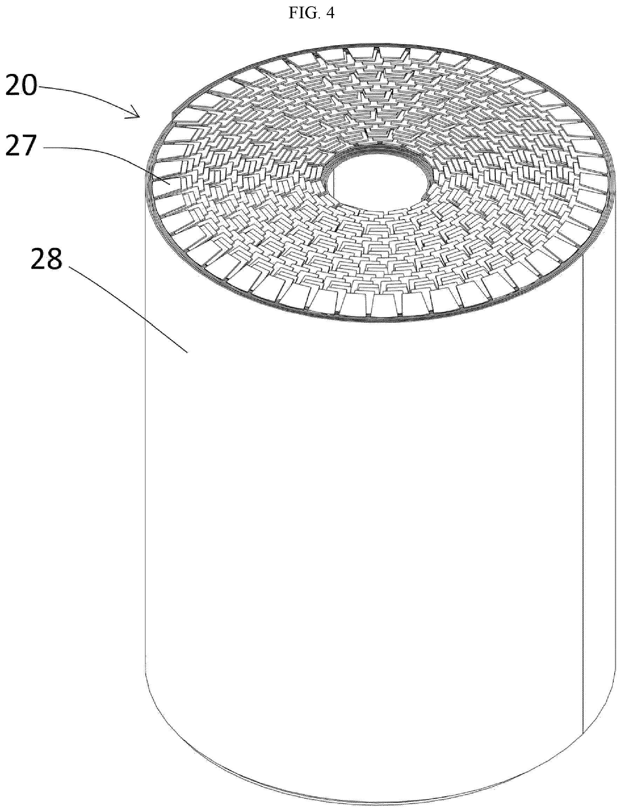

An electrode assembly 20 is accommodated inside the can 10. The electrode assembly 20 may be manufactured in the form of a jellyroll by preparing a first electrode 21, a second electrode 22, and a separator 28, which have a predetermined width and extend in the longitudinal direction as shown in FIG. 2, forming a laminate by sequentially stacking the first electrode 21, the separator 28, the second electrode 22, and the separator 28 as shown in FIG. 3, and then winding the same around a winding axis as shown in FIG. 4.

The first electrode 21 may be a positive electrode, and the second electrode 22 may be a negative electrode. In addition, the opposite may also be possible.

The first electrode 21 and the second electrode 22 may be manufactured in the form of sheets. The electrode sheet is manufactured such that an active material layer 24 is applied onto the surface of a metal foil 23. The electrode sheet has a coated area 25 where the active material layer 24 is applied, and an uncoated area 26 where the active material layer 24 is not applied. The positive electrode sheet may have an uncoated area 26 on one side in the width direction. The negative electrode sheet may have an uncoated area 26 on the other side in the width direction.

The uncoated area 26 may be exposed or protrude from the laminate in the width direction. The width direction of the laminate may indicate a direction parallel to the winding axis of the electrode assembly 20. The uncoated area 26 may function as an electrode tab 27 itself.

Notches may be formed at a predetermined interval in the uncoated area 26 to form flag-shaped notched tabs 27.

The embodiment shows an example in which the notched tabs 27 are configured in an equilateral trapezoidal shape. However, they have various shapes such as semicircles, semi-ovals, triangles, rectangles, and parallelograms.

In addition, the embodiment shows an example in which the notched tabs 27 disposed in the longitudinal direction have the same width. However, the widths of the notched tabs may be gradually or stepwise increased from the core to the outer side.

In addition, the embodiment shows an example in which the heights of the notched tabs 27 gradually increase from the core to the outer side. However, the heights of the notched tabs may be implemented to be constant or to be gradually reduced.

In addition, the embodiment shows an example in which the notched tabs 27 are excluded from a predetermined section adjacent to the core of the uncoated area 26 and a predetermined section adjacent to the outer side. However, it is obvious that the notched tabs may not be excluded from the predetermined section adj acent to the core of the uncoated area, and that the notched tabs may not be excluded from the predetermined section adjacent to the outer side of the uncoated area.

In the j ellyroll-type electrode assembly 20, the notched tab 27 may be bent radially and flattened as shown in FIG. 4. The notched tab 27 may be bent radially inward or outward. The embodiment shows an example in which the notched tab 27 is bent radially inward.

The notched tab 27 may be bent one by one during the process of forming the jellyroll-type electrode assembly 20 by winding the laminate. On the other hand, the notched tab 27 may be bent all at once after the jellyroll-type electrode assembly is formed by winding the laminate.

The notched tabs 27 of the first electrode 21 and the notched tabs 27 of the second electrode 22, which are bent radially and stacked as described above, may provide a plane substantially perpendicular to the axial direction at both axial ends of the electrode assembly 20.

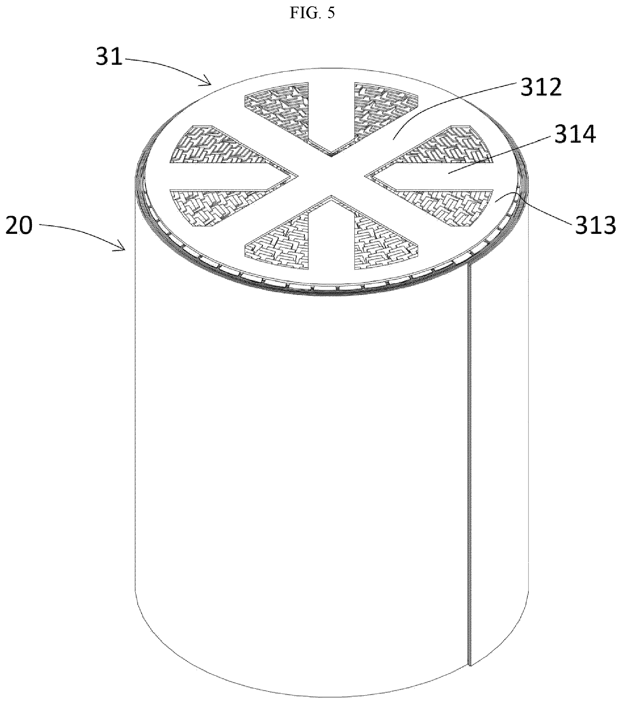

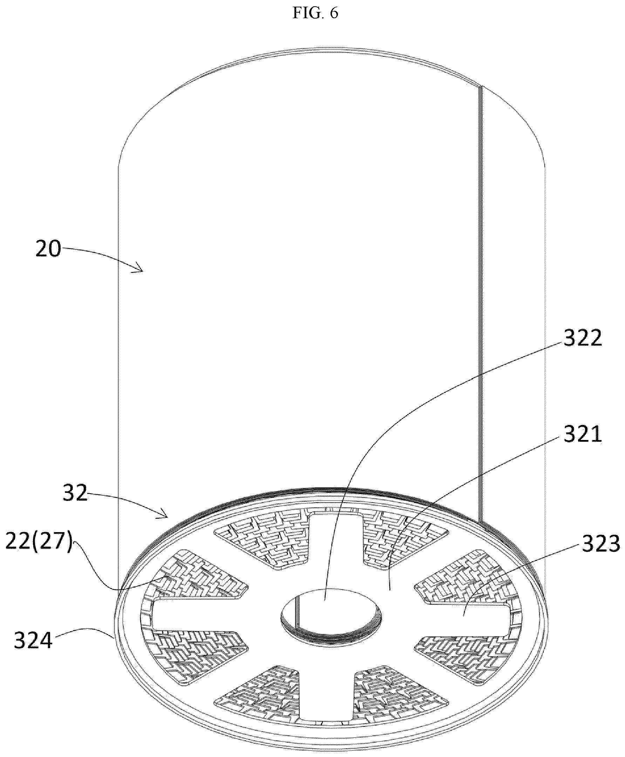

As shown in FIGS. 5 and 6, the first collector plate 31 and the second collector plate 32 may be bonded to the substantially flat surface provided by bending the notched tabs 27 exposed through both axial ends of the electrode assembly 20, respectively.

The embodiment shows an example in which the first collector plate 31 is a positive electrode collector plate and the second collector plate 32 is a negative electrode collector plate. The first collector plate 31 may be made of aluminum, and the second collector plate 32 may be made of copper.

The collector plates 31 and 32 may be manufactured by punching, trimming, piercing, and bending a metal sheet.

Referring to FIG. 5, the first collector plate 31 may include a terminal connection portion 312 extending radially from the center, a rim portion 313 connected to an outer end of the terminal connection portion 312 and extending in the circumferential direction, and an electrode connection portion 314 extending from the rim portion 313 toward the core. The electrode connection portion 314 may be spaced apart from the terminal connection portion 312 in the radial direction. The center of the terminal connection portion 312 covers at least a portion of the core hollow of the electrode assembly 20. The center area of the terminal connection portion 312 may be coupled to the first electrode terminal 13.

The electrode connection portion 314 may be bonded to the notched tab 27 of the first electrode 21 of the electrode assembly 20 by laser welding or the like before the electrode assembly 20 is stored inside the can 10. The welding line of the laser may extend radially.

Referring to FIG. 6, the second collector plate 32 may have a hole 322 corresponding to the core hollow (winding center hole) of the electrode assembly 20. The second collector plate 32 may include an inner ring portion 321 configured to surround the core hollow, an electrode tab connection portion 323 extending radially from the inner ring portion 321, and a can connection portion 324 disposed further outward than the electrode tab connection portion 323 and connected to the inner ring portion 321. The can connection portion 324 may be configured as a rim surrounding the edge of the second collector plate 32.

The electrode tab connection portion 323 may be bonded to the notched tab 27 of the second electrode 22 of the electrode assembly 20 by laser welding or the like before inserting the electrode assembly 20 into the can 10. The welding line of the laser may extend radially.

The first collector plate 31 and the second collector plate 32 may be bonded to the electrode assembly 20 before inserting the electrode assembly 20 into the can 10 as shown in the embodiment.

In addition, it is also possible to store the electrode assembly 20 to which only the first collector plate 31 is bonded inside the can 10 and then insert the second collector plate 32 into the can 10, thereby bonding the same to the electrode assembly 20.

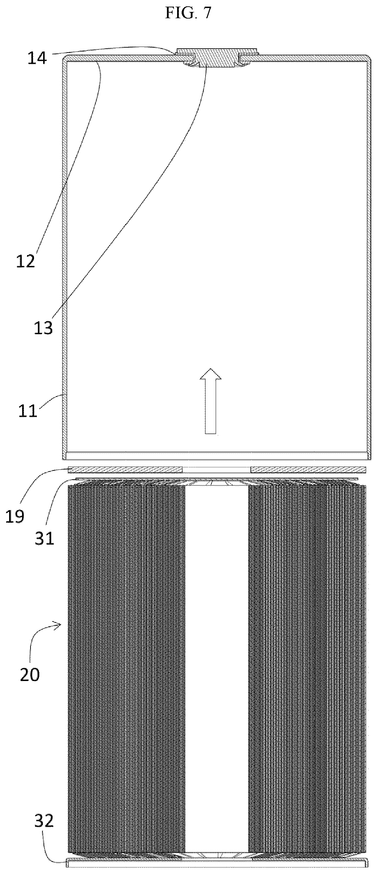

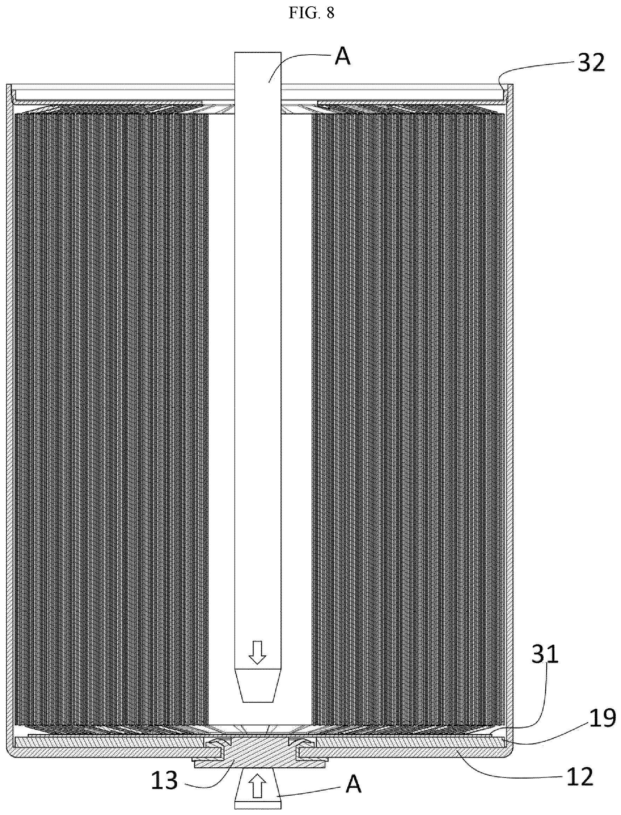

As shown in FIGS. 7 and 8, the electrode assembly 20 may be stored inside the can 10 in the state where the first collector plate 31 is aligned to face the bottom member 12 of the can 10. In this case, an insulator 19 may be interposed between the first collector plate 31 and the bottom member 12 of the can 10 so that the first collector plate 31 and the bottom member 12 are electrically insulated from each other. In the state where the electrode assembly 20 is inserted, the edge of the second collector plate 32 comes into contact with the can 10.

In addition, the terminal connection portion 312 of the first collector plate 31 may be bonded to the first electrode terminal 13 fixed to the can 10 by resistance welding, ultrasonic welding, laser welding, or the like. A welding device A for welding the first collector plate 31 and the first electrode terminal 13 may approach the center of the terminal connection portion 312 of the first collector plate 31 through the core hollow of the electrode assembly 20 from the open end of the can 10, thereby performing welding. Alternatively, a laser beam may be radiated onto the inner surface of the center of the terminal connection portion 312 of the first collector plate 31 through the core hollow of the electrode assembly 20, thereby welding the terminal connection portion 312 and the first electrode terminal 13. In addition, the first collector plate 31 and the first electrode terminal 13 may also be bonded by brazing or soldering. That is, any method may be applied as long as it is able to electrically connect and fix the first collector plate 31 and the first electrode terminal 13 to each other.

In the state where the electrode assembly 20 is accommodated inside the can 10, the electrode tab 27 of the second electrode 22 and the second collector plate 32 may be disposed to face the open end of the sidewall member 11.

After the first collector plate 31 and the first electrode terminal 13 are bonded, an electrolyte may be injected into the can 10.

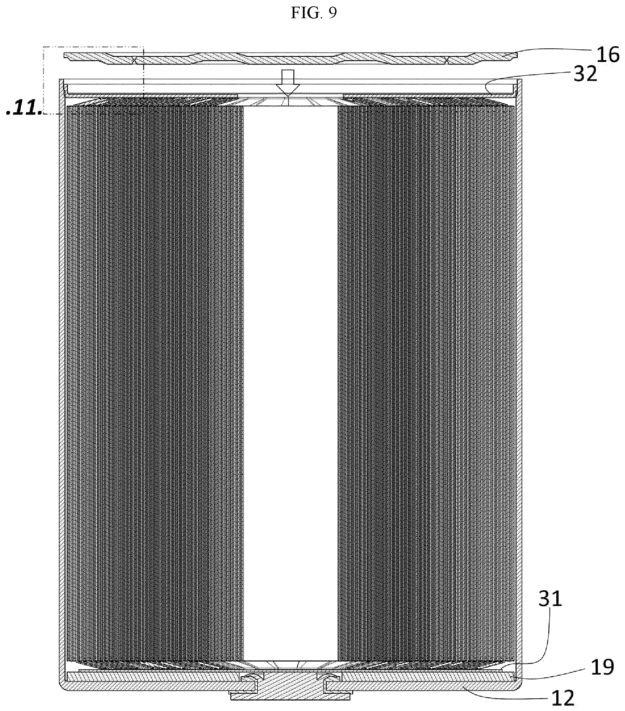

After the electrolyte is injected, the open end of the sidewall member 11 may be covered and closed by a cap 16 as shown in FIG. 9.

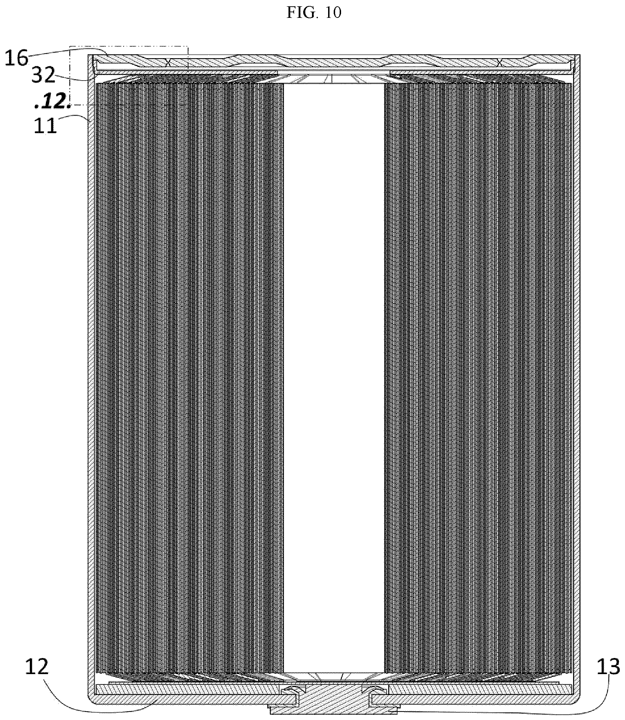

The edge of the cap 16 may abut against the can 10 and the edge of the second collector plate 32 as shown in FIG. 10.

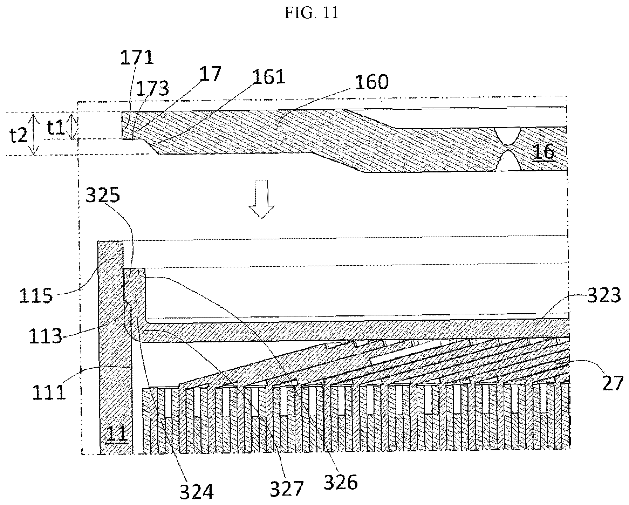

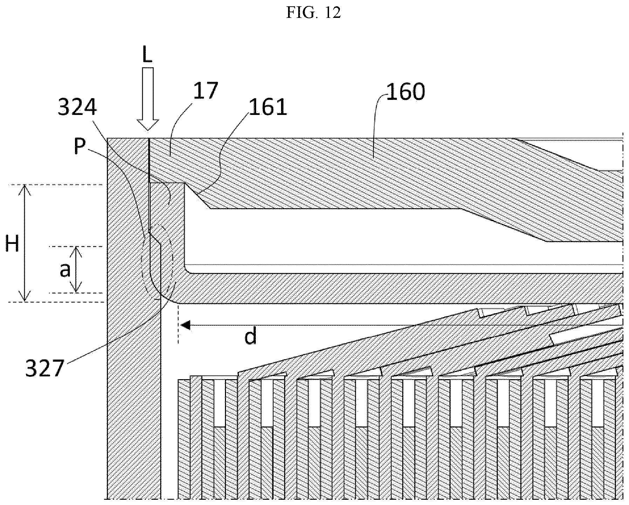

Referring to FIG. 11 and FIG. 12, the sidewall member 11 of the can 10 may have an inner-diameter expansion portion 113 at the open end. The inner-diameter expansion portion 113 may have an inclined surface provided on the inner surface of the sidewall member 11 so that the inner diameter of the sidewall member 11 increases as it is closer to the outer side in the axial direction. That is, the inner-diameter expansion portion 113 may include an inclined surface provided on the inner surface of the sidewall member 11 and extending radially outward as it is closer to the outer side in the axial direction.

Accordingly, the inner surface of the sidewall member 11 may include a first inner surface 111 provided axially further inward than the inner-diameter expansion portion 113, and a second inner surface 115 provided axially further outward than the inner-diameter expansion portion 113.

The outer diameter of the sidewall member 11 may be uniform in the axial direction, whereas the second inner surface 115 may have an inner diameter greater than that of the first inner surface 111. Accordingly, the radial thickness of the sidewall member 11 in the section of the second inner surface 115 may be smaller than the radial thickness in the section of the first inner surface 111.

The can connection portion 324 provided at the edge of the second collector plate 32 and in electrical contact with the can 10 may include a first portion that, at least in part, faces or comes into contact with the inner surface 111, 113, or 115 of the sidewall member 11. An outer abutting surface 325 may be provided on the first portion so as to face or come into contact with the inner surface 111, 113, or 115 of the sidewall member 11 in the radial direction.

The can connection portion 324 may include a second portion that comes into contact with the cap 16. A cap-abutting surface 326 may be provided on the second portion so as to face and come into contact with the axially inner surface of the cap 16.

The second collector plate 32 may include a bent portion 327. The bent portion 327 is configured such that the second collector plate 32, which extends outward in the radial direction, bends outward in the axial direction. The can connection portion 324 of the second collector plate 32 may be connected to the electrode tab connection portion 323 through the bent portion 327 and the inner ring portion 321 described above.

The can connection portion 324 may be connected to the axially outer side of the bent portion 327 and may be configured to extend from the bent portion 327 outward in the axial direction. Accordingly, the area and axial length of the outer abutting surface 325 of the second collector plate 32 may be further secured.

The material of the second collector plate 32 may be softer than the material of the sidewall member 11.

The thermal conductivity of the second collector plate 32 may be higher than the thermal conductivity of the sidewall member 11.

For example, the material of the second collector plate 32 may include copper. The material of the sidewall member 11 may include iron. However, the materials of the second collector plate 32 and the sidewall member 11 of the present disclosure are not limited thereto.

The outer diameter of the outer abutting surface 325 of the can connection portion 324 may be set to be larger than the inner diameter of the first inner surface 111. The outer diameter of the outer abutting surface 325 may correspond to or be smaller than the inner diameter of the second inner surface 115.

Then, the bent portion 327 is elastically deformed when inserting the second collector plate 32, and the outer abutting surface 325 is forcibly pressed to the first inner surface 111, so that the outer abutting surface 325 and the first inner surface 111 may come into close contact in the radial direction. Accordingly, as a result, the outer diameter of a first section a of the outer abutting surface 325 pressed to the first inner surface 111 in the axial direction corresponds to the inner diameter of the first inner surface 111.

As described above, the multi-stage inner surface structure of the sidewall member 11 and the structure of the can connection portion 324 of the collector plate 32 may surely cause at least an axial portion of the outer abutting surface 325 to come into close contact with the inner surface of the sidewall member 11.

The bent portion 327 may provide a curved surface whose outer diameter gradually decreases from the axial inner end to the axial inner side, compared to the can connection portion 324. In addition, the minimum outer diameter d of the curved surface measured at the lower end of the second collector plate 32 may be smaller than the inner diameter of the first inner surface 111. This shape may guide the can connection portion 324 to be forcibly pressed to the first inner surface 111 during the process of inserting the second collector plate 32 into the inner space of the sidewall member 11. Therefore, the process of forcibly pressing the second collector plate 32 may be performed more easily.

As a result, according to the present disclosure, if only the dimensional relationship is maintained such that the minimum outer diameter d of the bent portion 327 is smaller than the inner diameter of the first inner surface 111 of the sidewall member 11 and such that the outer diameter of the outer abutting surface 325 of the second collector plate 32 is larger than the inner diameter of the first inner surface 111, despite the dimensional tolerances of the components, it is possible to obtain the effect in which the first section a of the outer abutting surface 325 comes into close contact with the first inner surface 111 of the sidewall member 11 in the forcible fitting portion P. In addition, such dimensional management may be easily achieved.

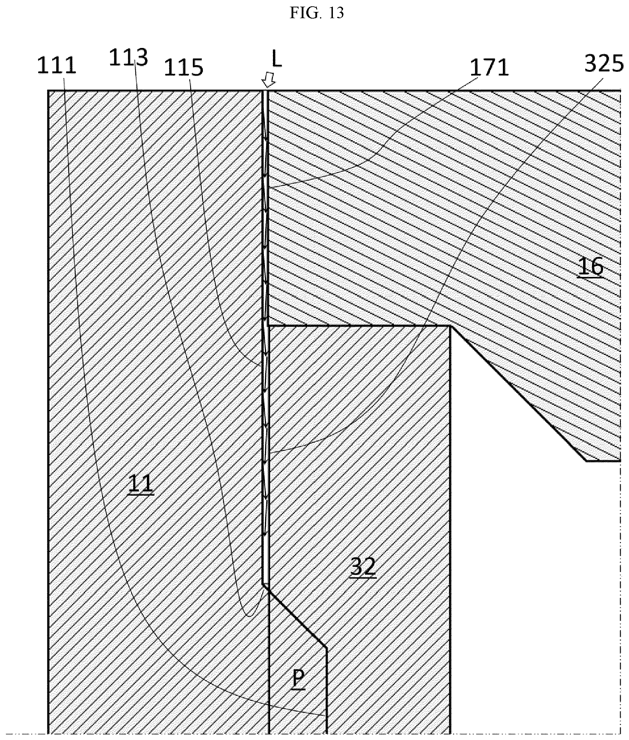

Accordingly, in the present disclosure, even if a portion of the laser beam L is radiated to the inside of the can as shown in FIG. 13 during the welding process described below, the second inner surface 115, the outer abutting surface 325, and the inner-diameter expansion portion 113 may block it, so that the laser beam L may not reach the components accommodated inside the can 10.

The cap 16 may have a cap body 160, a thickness reduction portion 161, and a bonding portion 17 in sequence from the radial center to the outer side. That is, the thickness reduction portion 161 may be provided adjacent to the radially outer side of the cap body 160, and the bonding portion 17 may be provided on the radially outer side of the thickness reduction portion 161.

Accordingly, a first thickness t1 of the bonding portion 17 measured in the axial direction may be configured to be smaller than a second thickness t2 of the cap body 160 measured in the axial direction.

An outer bonding surface 171 may be provided on the bonding portion 17 of the cap 16 so as to face the second inner surface 115 of the sidewall member 11 to be close thereto or come into contact therewith in the radial direction. In addition, a collector plate-abutting surface 173 may be provided on the axially inner surface of the bonding portion 17 of the cap 16 so as to face and come into contact with the cap-abutting surface 326 of the can connection portion 324 of the second collector plate 32 in the axial direction.

The weld portion described below may be formed between the outer bonding surface 171 of the cap 16 and the second inner surface 115 of the sidewall member 11. According to this, even if the cap 16 and the sidewall member 11 are welded to a depth of the first thickness t1, the abutting portion between the cap 16 and the sidewall member 11 may be completely bonded and connected. Then, even if a bulging phenomenon occurs in the cap 16 due to an increase in the internal pressure of the can 10, no stress concentration occurs at the bonding portion of the can 10 and the cap 16, and the thick cap body 160 may strongly resist against the bulging.

The thickness reduction portion 161 is a thickness change portion provided in the cap 16.

By appropriately selecting the position of the thickness reduction portion 161 so that at least a portion of the thickness reduction portion 161 comes into contact with the second collector plate 32, the thickness reduction portion 161 of the cap 16 may come into contact with the second collector plate 32 during the process of inserting the cap 16, facilitating the alignment of the cap 16.

In the embodiment, the thickness reduction portion 161 is implemented in the form of an inclined surface that extends axially outward as it is closer to radially outer side of the cap 16 in order to enhance the alignment effect.

During the process of inserting the cap 16 into the inner sidewall member 11, the thickness reduction portion 161 in the form of an inclined surface may come into contact with the radially inner edge of the cap-abutting surface 326. Accordingly, the axially outer end of the can connection portion 324 of the second collector plate 32 provided with the cap-abutting surface 326 may be pressed radially outward by the thickness reduction portion 161 so as to be disposed closer to or in closer contact with the second inner surface 115 of the sidewall member 11.

That is, the thickness reduction portion 161 in the form of an inclined surface may come into contact with the can connection portion 324 of the second collector plate 32 during the process of inserting the cap 16 through the open end of the sidewall member 11, thereby guiding the alignment of the cap 16 with respect to the center of the second collector plate 32 and pressing the axially outer end of the can connection portion 324 of the second collector plate 32 radially outward to bring the axially outer end of the can connection portion 324 of the second collector plate 32 into close contact with the second inner surface 115 of the sidewall member 11.

According to the cap 16 of the embodiment, the radial position of the thickness reduction portion 161 may be disposed as close to the weld portion as possible, so that the area of the cap body 160 that resists against the bulging may be maximally secured. In addition, such a selection of the position of the thickness reduction portion 161 may also provide a guide function of aligning the cap 16 while being in contact with the second collector plate 32.

In the state where the cap 16 is inserted through the open end of the sidewall member 11, the outer bonding surface 171 of the cap 16 and the outer abutting surface 325 of the second collector plate 32 may closely face or come into contact with the second inner surface 115 of the sidewall member 11 in the radial direction. That is, the outer bonding surface 171 of the cap 16 may face or come into contact with the second inner surface 115 in the radial direction, and the outer abutting surface 325 of the can connection portion 324 may face or come into contact with the second inner surface 115 at a position axially further inward than the outer bonding surface 171 in the radial direction.

In addition, the cap-abutting surface 326 provided on the axially outer end of the can connection portion 324 of the second collector plate 32 may come into contact with the collector plate-abutting surface 173 provided on the inner surface of the bonding portion 17 of the cap 16 in the axial direction.

According to this assembly structure, the insertion depth of the cap 16 may be accurately determined by the height H of the second collector plate 32, which may be influenced by the axial extension length of the can connection portion 324.

Meanwhile, there may be some errors in the outer diameter of the outer bonding surface 171 of the cap 16, the inner diameter of the second inner surface 115 of the sidewall member 11, and/or the outer diameter of the outer abutting surface 325 of the second collector plate 32 due to dimensional differences resulting from the component manufacturing process or the like. The occurrence of such errors may hinder the outer bonding surface 171 of the cap 16 and the outer abutting surface 325 of the second collector plate 32 from coming into close contact with the second inner surface 115 of the sidewall member 11. However, according to the battery cell structure of the present disclosure described above, the structure provided with the forcible fitting portion P and the inner-diameter expansion portion 113 shown in FIG. 3 may significantly reduce the risk of the laser beam L radiated for welding penetrating into the can 10, thereby damaging the electrode assembly 20.

According to one aspect of the present disclosure, as shown in the drawing, the outer bonding surface 171 of the cap 16 and the axial end of the inner surface of the sidewall member 11, which abut against each other in the radial direction, may be exposed to the axially outer side.

The cap 16 may be welded to the can 10 by the laser beam L radiated onto the axial end of the abutting portion between the outer bonding surface 171 of the cap 16 and the second inner surface 115 of the sidewall member 11 from the axially outer side of the battery cell.

The above second collector plate 32 may be made of a material having a higher thermal conductivity than the sidewall member 11. As described above, if the thermal conductivity of the sidewall member 11 is relatively low, the risk of damage to the separator provided in the electrode assembly 20 due to heat conduction generated during welding may be reduced. The second collector plate 32 may be in contact with the sidewall member 11. Therefore, the welding heat generated by the laser beam on the sidewall member 11 may be conducted to the electrode assembly 20 through the second collector plate 32, and the conducted welding heat may be transmitted to the separator of the electrode assembly 20 facing the sidewall member 11, thereby damaging the separator. However, as described above, if the thermal conductivity of the sidewall member 11 is configured to be lower than that of the second collector plate 32, the risk of damage to the separator due to heat conduction through the sidewall member 11 may be reduced.

The process of bonding and electrically connecting the second collector plate 32 to the sidewall member 11 of the can 10 and the process of sealing the can 10 by bonding the edge of the cap 16 to the sidewall member 11 of the can 10 may be performed together by seam welding.

By the seam welding, the edge of the cap 16 may be bonded to the sidewall member 11 of the can 10 to be sealed, and at the same time, the second collector plate 32 may be bonded to the sidewall member 11 of the can 10.

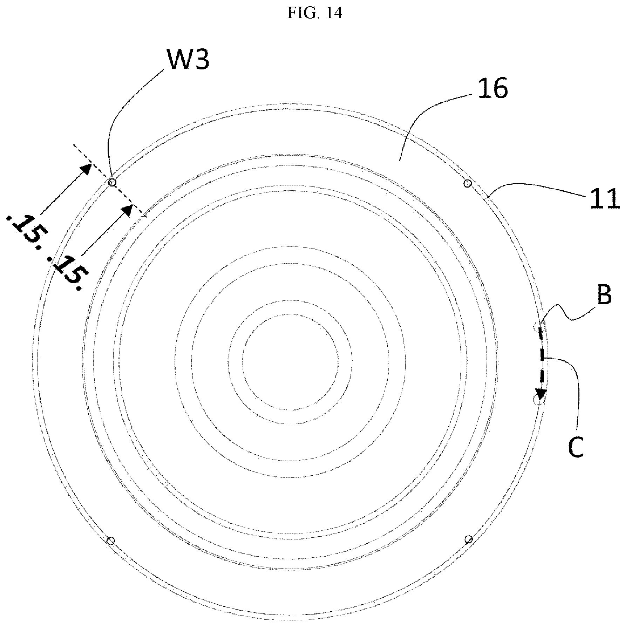

As shown in FIG. 14, this seam welding may be performed by radiating a laser beam L onto the abutting portion of the outer bonding surface 171 of the cap 16 and the second inner surface 115 of the sidewall member 11 extending in the circumferential direction, that is, by scan-radiating the laser beam onto the entire abutting portion in the circumferential direction.

As the scan-radiation is performed, the laser radiation area B moves along the abutting portion (see C in FIG. 14), and accordingly, the melted pool is continuously generated, propagated, and solidified in the circumferential direction at the abutting portion.

If the consistency of the generation, propagation, and solidification of the melted pool is secured during one seam welding process, the quality of the weld portion between the edge of the cap 16 and the end of the sidewall member 11 of the can 10 may be improved, thereby sufficiently securing the required sealing performance.

According to the embodiment, preliminary welding may be performed before the seam welding, thereby increasing the matching of the can 10 and the cap 16 and increasing the resistance against deformation of the can 10 and the cap 16, which may occur due to the welding heat during the main welding. In addition, the seam welding may be performed as the main welding performed after the preliminary welding described above.

The embodiment shows an example in which the main welding is performed after the preliminary welding. However, it is obvious that the seam welding may be performed without the preliminary welding.

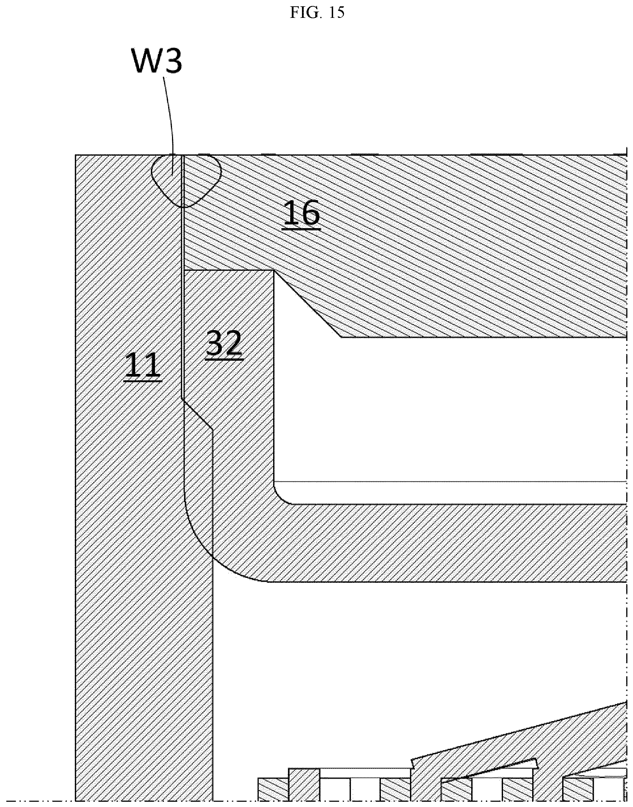

Referring to FIGS. 14 and 15, the preliminary welding may be performed at multiple positions spaced apart from each other in the circumferential direction of the abutting portion of the can 10 and the cap 16. This preliminary welding may be performed, for example, by radiating a laser beam with a lower output or lower energy density than the main welding to lightly fix the can 10 and the cap 16.

For reference, the energy density is proportional to the value obtained by dividing the laser output by the area of the radiation region. That is, the higher the laser output, the higher the energy density, and the wider the radiation area, the lower the energy density.

The preliminary welding positions and welding degree may be determined to minimize the inhibition of the melted pool propagation that may occur at the boundary of the preliminary welding area when performing the main welding while increasing the matching and deformation resistance. Accordingly, when scanning the laser in the circumferential direction during the main welding process, the consistency and stability of the melted pool may be secured.

The embodiment shows an example in which preliminary weld portions W3 are formed to have a minimum welding area by the preliminary welding at a minimum number of positions required, i.e., at four positions, so that no discontinuity of welding occurs on the welding interface.

The seam welding may be performed as the main welding continuously at the abutting portion along the circumferential direction such that first weld portions W1, in which the can 10, the second collector plate 32, and the cap 16 are welded together, are intermittently formed, and such that second weld portions W2, in which at least the can 10 and the cap 16 are welded together, are formed in the remaining seam welding sections.

This seam welding may be performed with a laser output, an area of the radiation, an energy density, and a scan speed capable of basically forming the second weld portion W2 for sealing and fixing the can 10 and the cap 16 while maximally suppressing the generation of welding heat. Meanwhile, the seam welding may be performed by intermittently varying at least one of the laser output, the area of radiation, the energy density, and the scan speed during the laser scan process. By intermittently varying the conditions of the laser scan as described above, the first weld portion W1, which is a triple weld portion in which the can 10, the cap 16, and the second collector plate 32 are welded together, may be formed.

As the number of first weld portions W1 increases and as the formation section of the first weld portions W1 is longer, the internal resistance may be reduced.

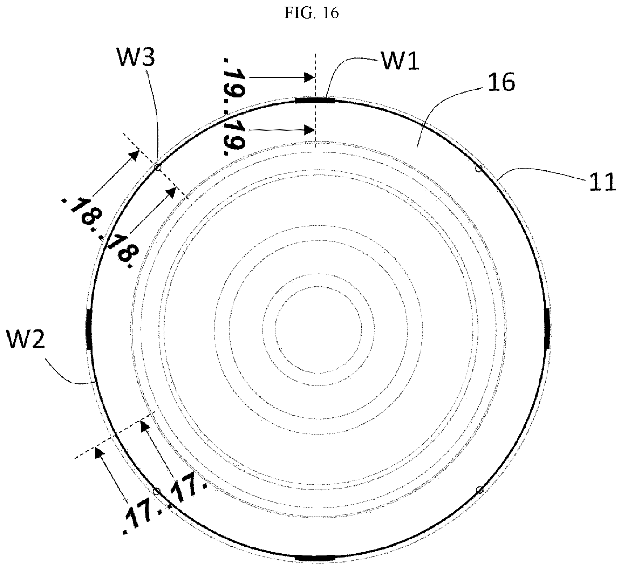

However, in order to triple-weld the can 10, the cap 16, and the second collector plate 32 together, the welding depth must be greater than the second weld portion W2 or the welding cross-sectional area must be wider when viewed in the circumferential direction. However, this may cause a lot of welding heat. Therefore, it is preferable that the first weld portion W1 is formed to a minimum to the extent of lowering the internal resistance to a necessary degree. Referring to FIG. 16, the embodiment shows an example in which four first weld portions W1 are disposed at equal intervals, and in which each first weld portions W1 is formed in a section less than approximately 15 degrees in the circumferential direction.

In the section forming the first weld portion W1, it is necessary to satisfy at least one of the conditions of an increase in the laser output or energy density, a decrease in the area of radiation, and a decrease in the laser scan speed, compared to the section forming the second weld portion W2.

Meanwhile, since the process of forming the first weld portion W1 is intermittently performed during the seam welding process of forming the second weld portion W2, it is desirable to continuously maintain the stability and consistency of the melted pool maintained in the second weld portion W2.

In consideration of this, the embodiment proposes a method of increasing the energy density by increasing the laser output while maintaining the area of radiation and the scan speed when forming the first weld portion W1 in the middle of forming the second weld portion W2 during the laser-scan welding process. According to this embodiment, when forming the second weld portion W2 in the middle of forming the first weld portion W1, the area of radiation and the scan speed may be maintained and the laser output may be lowered again.

In addition, in the output increase section where the second weld portion W2 switches to the first weld portion W1 and in the output decrease section where the first weld portion W1 switches to the second weld portion W2, it is desirable to control the output of the laser to increase or decrease continuously, instead of abruptly increasing or decreasing in a stepwise manner.

In addition, the increase rate of output in the output increase section may be configured to be greater than the decrease rate of output in the output decrease section.

When the laser radiated with a first output (lower output) in the section of forming the second weld portion W2 is increased to a second output (higher output), which is higher than the first output, for formation of the first weld portion W1, the output is increased very quickly at a first increase/decrease rate so that the generation of welding heat increases rapidly. Then, the generated welding heat may be intensively used to melt the portion to be welded before being transferred to another portion, so that triple welding of the can 10, the cap 16, and the second collector plate 32 may be reliably performed, and the side effect of the welding heat being transferred to the electrode assembly may be reduced.

When the laser radiated with the second output in the section for forming the first weld portion W1 is lowered to the first output for formation of the first weld portion W1, the output is reduced somewhat slowly at a second increase/decrease rate, which is lower than the first increase/decrease rate, so that the melted pool may be stably propagated.

Referring to FIGS. 16 to 19, it is preferable that the first weld portion W1 formation section is disposed so as not to overlap the preliminary weld portion, i.e., the third weld portion W3 formation position, in the circumferential direction. That is, the first weld portion W1 formation section and the third weld portion W3 formation section may not overlap each other. In other words, the third weld portion W3 formation section may be included in the second weld portion W2 formation section.

However, the third weld portion W3 may be disposed in the first weld portion W1 formation section as long as the degree of interference with the propagation of the melted pool, which may be caused by the third weld portion W3, is not large.

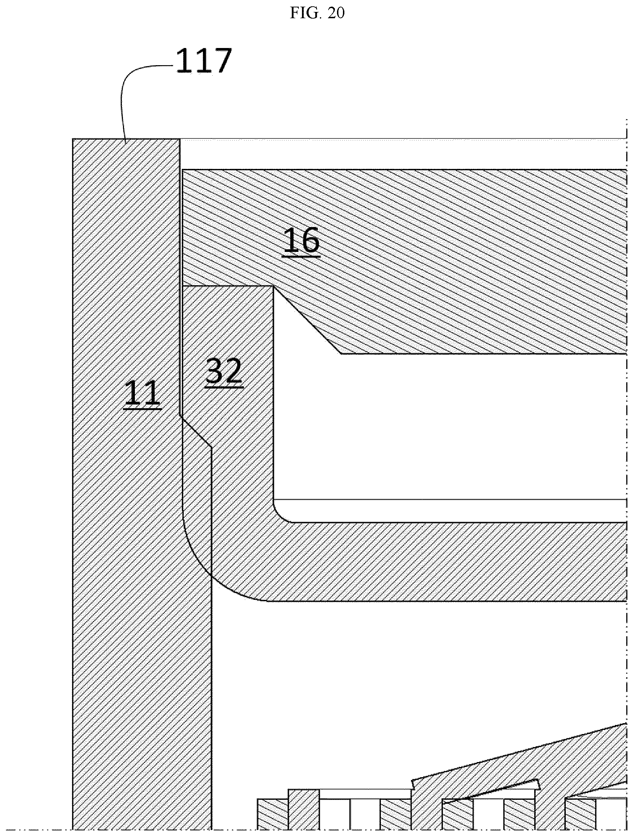

Referring to FIG. 20, the sidewall member 11 of the can 10 may extend longer than the sidewall member 11 in the previous embodiment. Accordingly, as shown in FIG. 20, in the state in which the second collector plate 32 and the cap 16 are inserted into the can 20, an overhang 117 that protrudes axially further outward than the cap 16 may be provided at the end of the sidewall member 11. The sidewall member 11 may have a thickness less than the cap 16.

In this case, the overhang 117 may delay the melting time of the sidewall member 11, which is thinner than the cap 16, thereby reducing the difference in the melting time between the sidewall member 11 and the cap 16. In the process of forming the weld portion, the overhang 117 may be melted to flow into the weld portion of the second inner surface 115 of the sidewall member 11 and the outer bonding surface 171 of the cap 16 (see FIG. 13). Accordingly, despite the deviation of the welding process, the weld portion may be formed over the entire outer bonding surface 171 of the cap 16 in the axial direction.

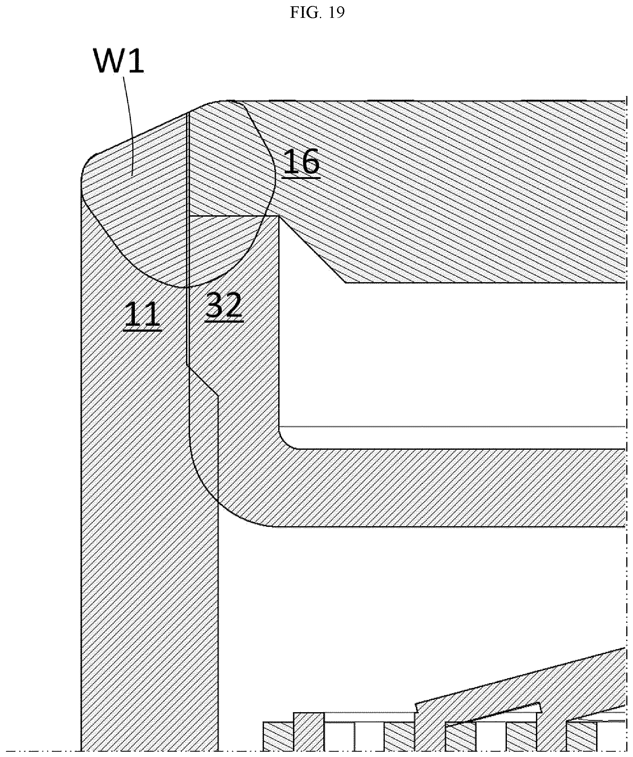

In the section of forming the first weld portion W1, the overhang 117 may be completely melted to flow into the abutting portion of the second inner surface 115 of the sidewall member 11, the outer bonding surface 171 of the cap 16, and the can connection portion 324 of the second collector plate 32, as shown in FIG. 19.

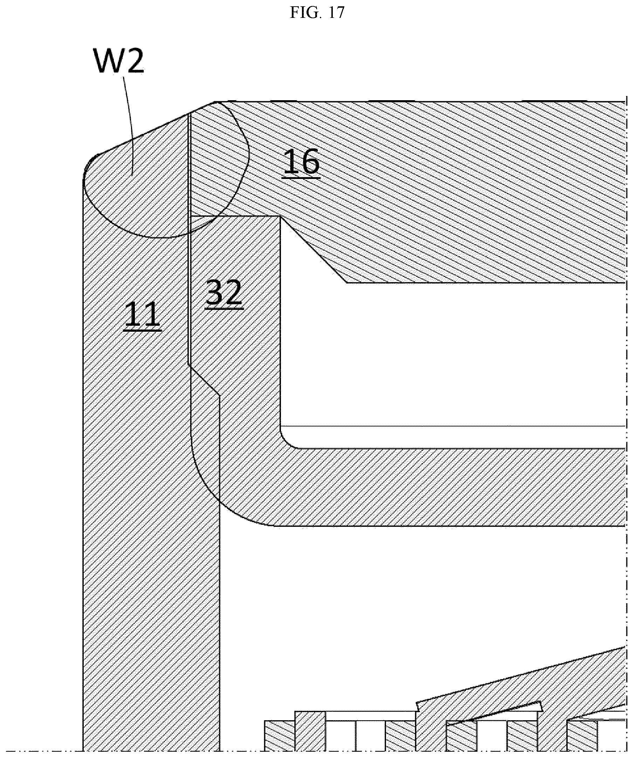

In the section of forming the second weld portion W2, the overhang 117 may be completely melted to flow into the abutting portion of the second inner surface 115 of the sidewall member 11 and the outer bonding surface 171 of the cap 16, as shown in FIG. 17. Accordingly, the height of the battery cell may be defined by the outer surface of the cap 16. That is, according to a modified example, since the overhang 117 and the weld portion do not determine the height of the battery cell, the height dimension of the battery cell may be managed consistently as a result.

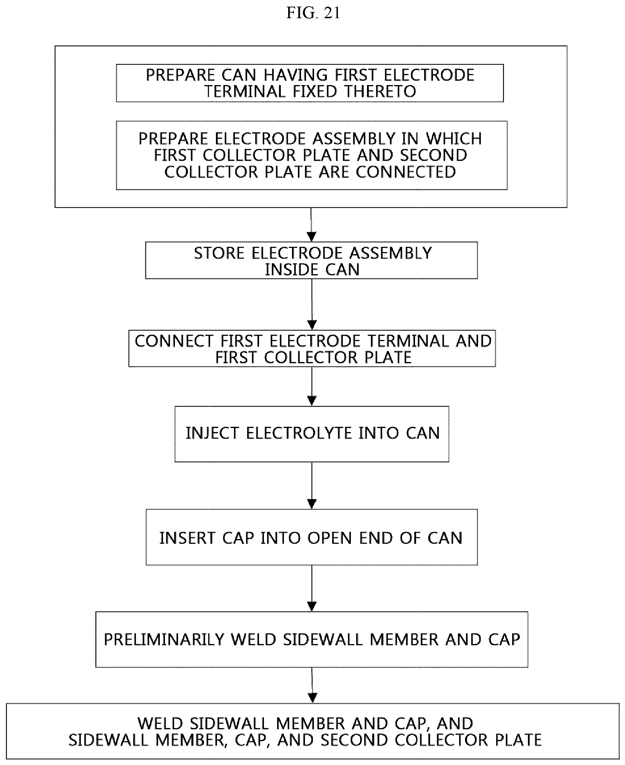

Hereinafter, a method of manufacturing the battery cell described above will be described with reference to FIG. 21.

According to the manufacturing method of the battery cell, first, a can 10 having a first electrode terminal 13 fixed to a bottom member 12 is prepared, and an electrode assembly 20 having a first collector plate 31 and a second collector plate 32 bonded to both axial ends, respectively.

Next, the electrode assembly 20 is inserted and received inside the can 10 with the first collector plate 31 facing the bottom member 12. Then, the second collector plate 32 is positioned at the open end of the can 10. In the process of storing the electrode assembly 20 inside the can 10, the first section a of the outer abutting surface 325 of a can connection portion 324 provided on the radially outer edge of the second collector plate 32 comes into close contact with the first inner surface 111 of the sidewall member 11.

Next, the first collector plate 31 and the first electrode terminal 13 are bonded.

In addition, an electrolyte is injected into the can 10.

After the electrolyte injection is completed, the open end of the sidewall member 11 is covered with a cap 16, and the outer bonding surface 171 and the collector plate-abutting surface 173 provided on the edge of the cap 16 are brought into contact with or face the second inner surface 115 of the sidewall member 11 and the cap-abutting surface 326 of the second collector plate 32, respectively.

In this case, the thickness reduction portion 161 configured in the form of an inclined surface on the axially inner surface of the cap 16 is brought into contact with the can connection portion 324 of the second collector plate 32, thereby aligning the cap 16, and the outer abutting surface 325 of the can connection portion 324 may be pressed toward the second inner surface 115 of the sidewall member 11.

Next, a laser beam is radiated onto the abutting portion of the second inner surface 115 of the sidewall member 11 and the outer bonding surface 171 of the cap 16 in the axial direction from the axially outer side, thereby performing welding.

In this case, the overhang 117 of the sidewall member 11, which protrudes further outward than the cap 16 in the axial direction, may be melted to flow into the weld portion between the inner surface of the sidewall member 11 and the outer bonding surface 171 of the cap 16.

When performing the welding, the preliminary welding process may be performed first, and then the main welding may be performed.

In the preliminary welding process, a laser beam is radiated onto the abutting portion of the inner surface of the sidewall member 11 and the outer bonding surface 171 of the cap 16 in the axial direction from the axially outer side at multiple positions spaced apart from each other along the circumferential direction, thereby forming a plurality of preliminary weld portions W3 by welding the inner surface of the sidewall member 11 and the outer bonding surface 171 of the cap 16. The preliminary welding is performed at a low output, so that the generation of a discontinuous surface may be suppressed.

The preliminary welding may be omitted.

Next, in the main welding process, a laser beam is radiated continuously along the circumferential direction onto the abutting portion of the inner surface of the sidewall member 11 and the outer bonding surface 171 of the cap 16 in the axial direction from the axially outer side so as to form a second weld portion W2 in which at least the inner surface of the sidewall member 11 and the outer bonding surface 171 of the cap 16 are welded together.

In this case, in the process of forming the second weld portion W2, at least one of the laser output, the area of radiation, the energy density in the radiation area, and the scan speed may be adjusted to intermittently increase the welding depth and/or the welding cross-sectional area so as to weld the inner surface of the sidewall member 11, the outer bonding surface 171 of the cap 16, and the can connection portion 324 of the second collector plate 32 together, thereby forming the first weld portion W1 as a triple weld portion.

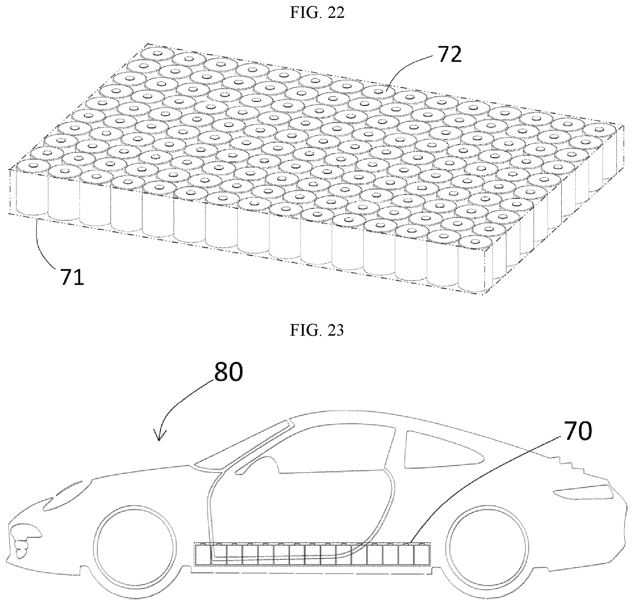

The battery cell 72 manufactured through the welding structure and welding process described above may be accommodated in a housing 71 of a battery pack 70 as shown in FIG. 22. The battery pack 70 may be configured using a battery module, as an intermediate assembly form, or may be configured directly without the battery module as shown.

Since the battery cell 72 described above has a large volume, there is no particular difficulty in implementing the battery pack 70 even without using an intermediate structure of a battery module. In addition, the battery cell 72 has a low internal resistance and higher energy density. Accordingly, the energy density of the battery pack 70 equipped with the battery cell 72 may be implemented higher.

The battery pack 70 with the increased energy density may store the same energy while reducing its volume and weight. Therefore, if the battery pack 70 to which the battery cell 72 is applied is mounted to a vehicle such as a vehicle 80 that uses electricity as an energy source as shown in FIG. 23, the mileage of the vehicle per energy may be further increased.

It should be understood that the above-described embodiments are exemplary in all respects, instead of limiting the present disclosure, and the scope of the present disclosure will be indicated by the claims described below rather than the detailed description described above. In addition, the scope of the present disclosure should be interpreted to encompass all changes and modifications derived from the equivalent concept, as well as the meaning and scope of the claims to be described later.

As described above, although the present disclosure has been described with reference to limited embodiments and drawings, the present disclosure is not limited thereto, and it is obvious to those skilled in the art that various modifications and variations are possible within the technical idea of the present disclosure. In addition, even if the effects according to the configuration of the present disclosure were not explicitly described while explaining the embodiments of the present disclosure, it is apparent that the effects predictable by the configuration must also be accepted.

### [Description of Reference numerals]

10: Can
11: Sidewall member
111: First inner surface
113: Inner-diameter expansion portion
115: Second inner surface
117: Overhang
12: Bottom member
13: First electrode terminal (positive electrode terminal)
14: Gasket
15: Second electrode terminal
16: Cap
160: Cap body
161: Thickness reduction portion
17: Bonding portion
171: Outer bonding surface
173: Collector plate-abutting surface
19: Insulator
20: Electrode assembly
21: First electrode
22: Second electrode
23: Metal foil
24: Active material layer
25: Coated area
26: Uncoated area
27: Electrode tab (notched tab)
28: Separator
31: First collector plate (positive electrode collector plate)
312: Terminal connection portion
313: Ring portion
314: Electrode connection portion
32: Second collector plate (negative electrode collector plate)
321: Inner ring portion
322: Hole
323: Electrode tab connection portion
324: Can connection portion
325: Outer abutting surface
326: Cap-abutting surface
327: Bent portion
70: Battery pack
71: Housing
72: Battery cell
80: Vehicle
A: Welding device
B: Laser radiation area
C: Laser scan path
W1: First weld portion
W2: Second weld portion
W3: Third weld portion

## Claims

1. A battery cell comprising:
a can comprising a bottom member, a sidewall member connected to the bottom member and extending in an axial direction, and a cap configured to cover an open end provided at one axial end of the sidewall member; and
an electrode assembly accommodated inside the can,
wherein a can connection portion is provided on an edge of a collector plate electrically connected to an electrode of the electrode assembly so as to come into electrical contact with the can,
wherein a plurality of first weld portions, in which an edge of the open end of the sidewall member, an edge of the cap, and the can connection portion are welded together, are formed to be spaced apart from each other in a circumferential direction, and
wherein a second weld portion, in which at least an edge of the open end of the sidewall member and an edge of the cap are welded, is formed continuously along the circumferential direction between two first weld portions that are adjacent in the circumferential direction so as to be connected to the two first weld portions.

2. The battery cell according to claim 1,
wherein third weld portions, in which an edge of the open end of the sidewall member and an edge of the cap are welded, are formed to be spaced apart from each other in the circumferential direction, and
wherein a welding depth of the second weld portion is greater than a welding depth of the third weld portion or a cross-sectional area of the second weld portion is greater than a cross-sectional area of the third weld portion when viewed in the circumferential direction.

3. The battery cell according to claim 2,
wherein a section where the third weld portion is formed does not overlap a section where the first weld portion is formed in the circumferential direction.

4. The battery cell according to claim 2,
wherein a section where the third weld portion is formed overlaps a section where the second weld portion is formed in the circumferential direction.

5. A battery cell according to claim 1,
wherein a welding depth of the first weld portion is greater than a welding depth of the second weld portion, or
wherein a cross-sectional area of the first weld portion is greater than a cross-sectional area of the second weld portion when viewed in the circumferential direction.

6. The battery cell according to claim 1,
wherein the can connection portion comprises:
an outer abutting surface in which a first section that is at least a portion of an axial section faces and comes into contact with an inner surface of the sidewall member in a radial direction; and
a cap-abutting surface configured to face and come into contact with an inner surface of the cap in the axial direction, and
wherein the cap comprises an outer bonding surface configured to face or come into contact with the inner surface of the sidewall member in the radial direction.

7. The battery cell according to claim 6,
wherein the cap comprises a collector plate-abutting surface defined by an axially inner surface of the cap and configured to face and come into contact with a cap-abutting surface of the can connection portion of the collector plate in the axial direction, and
wherein the outer bonding surface of the cap is disposed axially further outward and radially further outward than the collector plate-abutting surface.

8. The battery cell according to claim 7,
wherein the cap comprises an inclined surface disposed radially further inward than the collector plate-abutting surface on the axially inner surface of the cap and extending axially inward as it is closer to the radially inner side, and
wherein the inclined surface comes into contact with at least a corner portion forming a boundary between an axially outer end and a radially inner end of the can connection portion of the collector plate.

9. The battery cell according to claim 6,
wherein an outer diameter of the first section of the outer abutting surface is greater than an inner diameter of the inner surface of the sidewall member in contact therewith, so that the first section of the outer abutting surface is forcibly pressed to the sidewall member.

10. The battery cell according to claim 6,
wherein the sidewall member comprises, at one axial end:
an inner-diameter expansion portion having an inclined shape so that an inner diameter of the sidewall member is increased;
a first inner surface provided axially inward, based on the inner-diameter expansion portion; and
a second inner surface provided axially outward, based on the inner-diameter expansion portion, and having an inner diameter greater than that of the first inner surface,
wherein the outer abutting surface of the can connection portion faces or comes into contact with the second inner surface, and
wherein the outer bonding surface of the cap faces or comes into contact with the second inner surface.

11. The battery cell according to claim 10,
wherein an outer diameter of the first section of the outer abutting surface is greater than an inner diameter of the first inner surface.

12. The battery cell according to claim 10,
wherein an outer diameter of the outer abutting surface corresponds to or is less than an inner diameter of the second inner surface.

13. The battery cell according to claim 6,
wherein an overhang is provided at one axial end of the sidewall member so as to protrude further outward than the cap in the axial direction, and
wherein the overhang is melted to flow into a weld portion of the inner surface of the sidewall member and the outer bonding surface of the cap.

14. The battery cell according to claim 13,
wherein a height of the battery cell is defined by a surface of the cap.

15. A method for manufacturing a battery cell comprising: a can comprising a bottom member, a sidewall member connected to the bottom member and extending in an axial direction, and a cap configured to cover an open end provided at one axial end of the sidewall member; an electrode assembly accommodated inside the can; and a collector plate coupled to one side of the electrode assembly, the method comprising:
a first step of bring an outer abutting surface of a can connection portion provided at a radially outer edge of the collector plate into contact with an inner surface at the open end of the sidewall member;
a second step of covering the open end of the sidewall member with the cap, causing an outer bonding surface provided on an edge of the cap to face the inner surface of the sidewall member in a radial direction, and bring an inner surface of the cap into contact with a cap-abutting surface of the collector plate in the axial direction; and
a third step of radiating a laser beam onto an abutting portion of the inner surface of the sidewall member and the outer bonding surface of the cap in the axial direction from an axially outer side, while continuously radiating the laser beam along a circumferential direction, and performing welding such that a first weld portion in which the inner surface of the sidewall member, the outer bonding surface of the cap, and the can connection portion of the collector plate are welded together alternates with a second weld portion in which at least the inner surface of the sidewall member and the outer bonding surface of the cap are welded together.

16. The method for manufacturing a battery cell according to claim 15, comprising
alternately forming the first weld portion and the second weld portion so that a circumferential length of the second weld portion is formed longer than a circumferential length of the first weld portion.

17. The method for manufacturing a battery cell according to claim 15, further comprising
a preliminary welding step of, performed between the second step and the third step, forming a plurality of third weld portions, in which an edge of the open end of the sidewall member and an edge of the cap are welded, to be spaced apart from each other in the circumferential direction.

18. The method for manufacturing a battery cell according to claim 17,
wherein the third step comprises a step of melting an overhang of the sidewall member, which protrudes further outward in the axial direction than the cap, to flow into a weld portion of the inner surface of the sidewall member and the outer bonding surface of the cap.

19. The method for manufacturing a battery cell according to claim 15,
wherein an intensity of a laser beam radiated onto a section for welding the first weld portion or an energy density of a laser radiation area thereof is stronger or higher than an intensity of a laser beam radiated onto a section for welding the second weld portion or an energy density of a laser radiation area thereof.

20. The method for manufacturing a battery cell according to claim 19,
wherein a movement speed of a radiation area of the laser beam radiated onto the section for welding the first weld portion and a movement speed of a radiation area of the laser beam radiated onto the section for welding the second weld portion are constant.
